# EUROPEAN PATENT SPECIFICATION

(11) **EP 2 509 393 B1**
(45) Date of publication and mention of the grant of the patent: **12.06.2019**
(21) Application number: 12162801.0
(22) Date of filing: 02.04.2012
(51) Int. Cl.: H05B 6/80, F16L 59/00

(54) **Apparatus and method for forming pipe insulation sections of mineral wool**
Vorrichtung und Verfahren zur Herstellung von Rohrisolationsabschnitten aus Mineralwolle
Dispositif et procédé pour former des sections d'isolation de tuyaux de laine minérale

(30) Priority: 04.04.2011 FI 20115323
(43) Date of publication of application: 10.10.2012
(73) Proprietor: Paroc Group Oy, 00180 Helsinki (FI)
(72) Inventor: NIKKINEN, Matti, 53500 Lappeenranta (FI); SKIPPARI, Sami, 53500 Lappeenranta (FI); BJÖRKHOLM, Mika, 53300 Lappeenranta (FI)
(74) Representative: LEITZINGER OY

(56) References cited:
- EP-A1- 2 397 742
- WO-A1-2006/128964
- WO-A1-2007/020331
- JP-A- 5 280 689
- US-A- 4 906 309
- US-A- 5 844 217
- US-A- 6 004 123

## Description

An object of the invention is an apparatus for forming pipe insulation sections of mineral wool, wherein in the curing of pipe insulation microwave irradiation is used.

Another further object of the invention is a method for forming pipe insulation sections of mineral wool, wherein in the curing of pipe insulation microwave irradiation is used.

### Prior art

The curing of a single mineral wool section blank has been performed in the past with curing energy provided by gas burner-generated heat. The down-sides of such a curing process include an extensive curing air pipe system, regular cleaning required by the curing pipe system, and atmospheric emissions from the curing process. Replacing the gas burner-generated heat with microwave irradiation enables simplification of the section forming apparatus, a solution to the cleaning problem (no extensive pipe system), and conservation of energy and reduction of emissions.

Today, the common practice in the process of manufacturing mineral wool sections is to deliver mineral wool onto a heated core, followed by transferring the cores along with their mineral wools into a mold, and performing the curing by blowing hot air (about 200-250°C) through the mineral wool. This practice involves the use of a large amount of energy for heating and moving the air and, in addition, the blowing of air through mineral wool results in a partial re-orientation of fibers and creates "air channels" in the product and thereby undermines the insulation capacity, while the air duct system and the blowers also require maintenance and cleaning operations on a regular basis. Accordingly, there is a need to cut back energy consumption, working operations, as well as to improve product quality.

JP 5 280689 A discloses a known apparatus for forming pipe insulation sections.

### General description of the invention

The above-mentioned need of cutting back working operations in an effort to reduce production costs can be satisfied by an apparatus according to claim 1.

In the apparatus according to the invention, the first elements for heating the outer mold at least over its internal surface can be e.g. induction elements, electrical resistance elements, gas burners, etc.

The core is made of steel. It came as a surprise to the inventors of the present invention that steel could actually be used with microwaves, it being known even for a man in the street that steel objects may not be placed in a microwave oven as this generates sparks when operating the microwave oven. It is a general understanding among skilled persons that the reaction of steel to microwaves generally creates "concentrations" of energy and may produce a short circuit type effect in case the energy density becomes sufficiently high. However, it was surprisingly discovered that by using a steel core it is possible to produce very uniformly cured pipe insulation sections of mineral wool provided that a suitable microwave frequency is selected and the quality of curing result is monitored. It was found that the steel core both heats up in response to microwave radiation and reflects microwaves, and that the steel core can be therefore used both for curing the internal bore of a pipe insulation section and for distributing the microwave energy throughout the entire pipe insulation section. While not wishing to be bound by theory, we believe that the reason why steel cores heat up by microwave irradiation is the ferromagnetism of steel.

In the apparatus according to the invention, each mold comprises preferably separable and assemblable bottom and top parts, whereby, when the bottom and top parts are apart from each other, the bottom part is able to accommodate a core around which has been applied mineral wool sheet for a tubular layer of mineral wool.

The apparatus preferably further includes roll-up elements for winding a presently mat-shaped mineral wool sheet at least in a single layer around the core for an essentially tubular mineral wool section blank. Said roll-up elements constitute a separate segment, which is preferably apart from the outer mold and from which the core, and the mineral wool applied around it for an essentially tubular mineral wool section blank, are capable of being transferred and fitted into the outer mold. In one preferred embodiment of the apparatus according to the invention, the number of molds is not less than two, preferably e.g. eight. The mineral wool consists for example of stone or glass wool.

The method according to the invention is defined in claim 6.

The core is made of steel. Preferably, the number of molds is not less than two, the curing being performed as batch curing.

In the method according to the invention, said one or more outer molds, which are cylindrical in terms of their internal surface, are preferably heated for example with electric resistors.

In the method according to the invention, it is further preferred that the mineral wool sheet be wrapped around the core outside the mold, followed by installing the core in the mold. Hence, it is preferred that the core be heated prior to wrapping the mineral wool sheet around the core. The mineral wool consists for example of stone or glass wool.

The apparatus (first heating elements) and method of the invention for heating the outer molds enable the use of any heating means known for a skilled person, such as e.g. induction elements, electrical resistance elements, gas burners, etc. The apparatus and method of the invention enable also the cores to be heated by the above-mentioned heating means, i.e. by using e.g. induction elements, electrical resistance elements, gas burners, etc.

The invention will now be described in more detail by way of example with reference to the accompanying drawings, in which
- fig. 1: is a schematic plan view of a section forming apparatus of the invention, comprising two molds and being in a closed operating condition,
- fig. 2: is schematic side view of the section forming apparatus shown in fig. 1, which is in a loading/unloading condition,
- fig. 3: is schematic side view of the section forming apparatus shown in fig. 1, which is in a closed operating condition.

### Detailed description of the invention

The embodiment according to the invention, presented hereinafter by way of example, is not to be construed as limiting the appended claims.

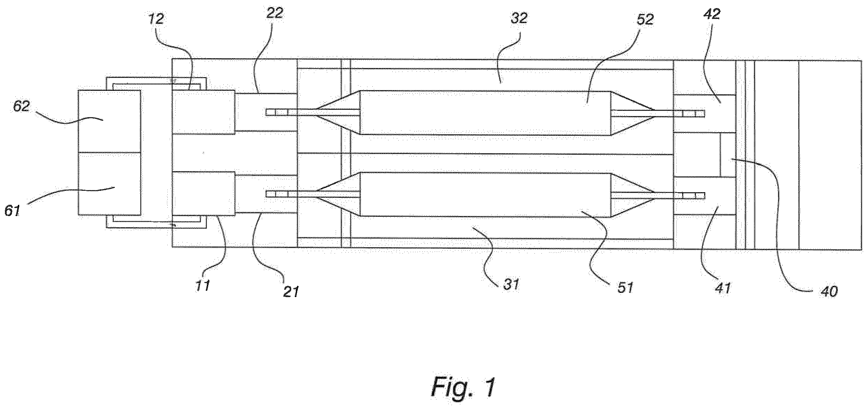

Fig. 1 shows one embodiment for a section forming apparatus of the invention, said section forming apparatus including two outer molds 31, 32 and each mold with one core 51, 52. The outer molds 31, 32 have a cavity which is cylindrical or tubular in shape. The apparatus according to fig. 1 enables forming and curing two mineral wool sections simultaneously. The apparatus according to the invention, including the embodiment depicted in fig. 1, is an apparatus intended for the batch production of mineral wool sections. In this embodiment of the invention, the apparatus has its cores 51, 52 made of steel. The mineral wool used for insulation sections may consist for example of stone wool or glass wool. For the sake of clarity, the mineral wool used subsequently in the presently discussed embodiment consists of stone wool, but the insulation section material employed in the subsequently described embodiment could just as well be glass wool instead of stone wool.

The embodiment depicted in fig. 1 features two microwave generator 61, 62, two conductor units 11, 12, and two adapter elements 21, 22. In addition, the apparatus has each of its two molds 31, 32 provided with one opposite adapter element 41, 42 with a connecting channel 40 therebetween for propagating the microwaves in both directions between the opposite adapter elements 41, 42.

In the apparatus of fig. 1, the curing process of stone wool, present in the molds 31, 32 and applied around the cores, is initiated by supplying microwave energy to each mold 31 and 32 with two generators 61, 62 as follows: The first generator 61 serves to deliver microwave energy by way of the first conductor unit 11 and the first adapter element 21 into the first mold 31, wherefrom the microwave energy circulates by way of the first opposite adapter element 41, the connecting channel 40 and the second opposite adapter element 42 into the second mold 32 and further by way of the second adapter element 22 to the second conductor unit 12. Respectively, the second generator 62 serves to deliver microwave energy in a reversed order in the opposite direction, i.e. by way of the second conductor unit 12 and the second adapter element 22 into the second mold 32, wherefrom the microwave energy circulates by way of the second opposite adapter element 42, the connecting channel 40 and the first opposite adapter element 41 into the first mold 31 and further by way of the first adapter element 21 to the first conductor unit 11. In the process of delivering microwave irradiation into each mold, each core 51, 52 inside the mold heats up by virtue of the microwave radiation, thus producing an internal bore in each stone wool section. In addition, the cores exposed to microwave irradiation reflect microwave energy to the stone wool section product throughout its thickness and thereby cures the stone wool present between the stone wool section's external and internal surface.

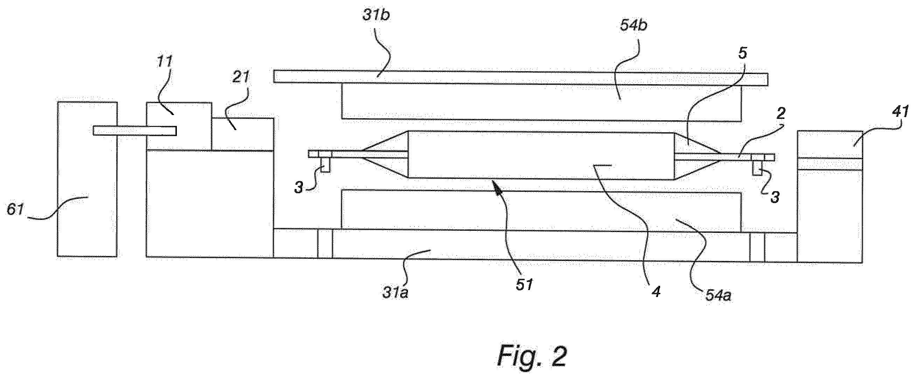

Fig. 2 shows in a lateral view the section forming apparatus depicted above in fig. 1, which is in its open condition with just one mold-core pair 31, 51 and the generator 61 directly linked therewith, the conductor unit 11, the adapter element 21 and the opposite adapter element 41 being visible in the figure. When the section forming apparatus is in its open condition, each mold 31 (32 is not shown in the figure) can be loaded with the core 51, 52 (52 is not shown in the figure), around which has been wrapped stone wool sheet to be cured (not shown in the figure), or from each mold 31, 32 can be removed the core 51, 52 with a fully cured stone wool section around it. The exemplified apparatus features a joint lower support 31a bearing a bottom part 54a of each outer mold 31, 32, as well as a joint upper support 31b bearing a top part 54b of each other mold 31, 32. The outer molds 31, 32 are opened and closed by lowering and raising the lower support 31a by means of a lift table (not shown in the figure) installed below the same. The upper support 31b, along with its top mold part 54b, is also adapted to be lowered and raised, yet to a lesser extent than the lower support.

When the molds 31 (32) are in their open condition, each assembly consisting of the microwave generator 61 (62), the conductor unit 11 (12) and the adapter element 21 (22), as well as each respective opposite adapter element 41 (42), are also in an open condition, which implies that they have been shifted sufficiently away from each other for enabling the cores 1 (2) to be installed or loaded in the bottom parts 54a of the presently open molds 51 (52) or to be removed from the molds. Each assembly, consisting of the microwave generator 61 (62), the conductor unit 11 (12) and the adapter element 21 (22), as well as each respective opposite adapter element 41 (42), are hence movable relative to each other further away or closer together in the direction of the longitudinal axes of the mold and core.

The cores 51 (52) comprise an envelope surface 4 and a delivery shaft 2 emerging at each end thereof. The cores are entirely made of steel. The cores are adapted to be transferred into the molds and away therefrom by means of carrier elements 3 attachable to the core delivery shafts 2 at both ends of the cores, such that the cores will be brought between the spaced-apart top and bottom parts 54a, 54b of the molds, after which the lower support 31a, along with its bottom mold parts 54a, is raised by means of a lift table such that the top and bottom mold parts come into contact with each other and thereby enclose within themselves the cores with a wool to be cured.

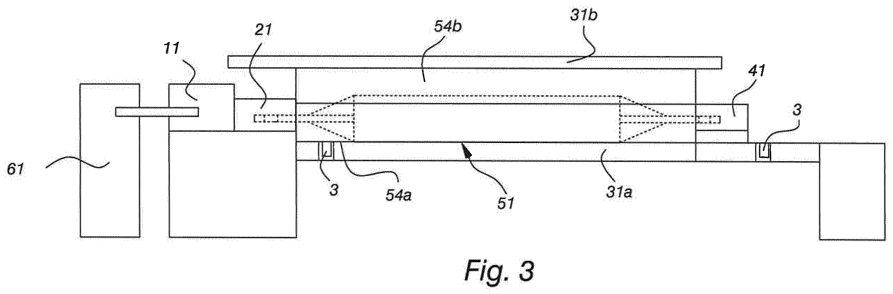

In fig. 3, the mold is in a closed condition, i.e. in an operating condition, thus enclosing within itself the core surrounded by stone wool. This can be achieved by raising the lower support 31a, which is resting on a lift table (not shown in the figure), to its top position, as well as by moving longitudinally the assembly, consisting of the microwave generator 61 (62), the conductor unit 11 (12) and the adapter element 21 (22), and each respective opposite adapter element 41 (42) towards each other to a closed position. In the operating condition, the carrier elements 3 have been disengaged from the unsupported ends of each core's 51 (52) drive shaft 2 and one shaft end is fixedly clamped inside the adapter element 21 (22) and the other shaft end inside the opposite adapter element 41 (42).

The furnishing of cores with mineral wool, i.e. in this particular example with stone wool, is hence performed outside the molds, from which location the cores are then transferred by means of carrier elements to the section forming apparatus. The furnishing of cores with stone wool takes place for example in such a way that stone wool sheet in the shape of a mat is wrapped around a heated core for at least a single layer. The heating of cores prior to the wrapping of stone wool can be carried out at a stone wool wrapping station with induction elements or a gas flame. On the other hand, the heating of internal aluminum mold cavity surfaces can be carried out with electric resistors. Once enclosed with the molds, the heated cores need no further heating as the steel cores heat up in response to microwave energy, thus achieving the curing of stone wool sections' internal bores. In addition, the steel cores also distribute microwave energy throughout the thickness of a stone wool section by means of microwave reflection from the steel.

The foregoing apparatus is but one example of implementing an apparatus of the invention, nor should it be construed as limiting the appended claims.

The number of molds in an apparatus of the invention can be 1+n (n=0, 1, 2, ...), whereby the number of adapter elements and cores in the apparatus is respectively also 1+n. An even number of molds is cost efficient, but it is also possible to have an odd number of molds.

The apparatus according to the invention is used to produce a fully cured product in a single batch or, in the case of fig. 1, two cured stone wool sections. In the apparatus according to the invention, each mold and core are heated, stone wool is loaded upon each hot core, which is (are) transferred into the mold, and the stone wool is cured with microwaves and the obtained result is a fully cured product or stone wool section. The mineral wool employed in this particular example has been stone wool, but, as pointed out earlier, the invention can also be implemented e.g. with glass wool instead of stone wool.

The method according to the invention is a batch process, i.e. it comprises opening the mold, "loading" the cores with wool therearound, closing the mold, performing the curing with microwaves, terminating the microwave irradiation, opening the mold, removing the products and at the same loading the new ones, etc.

In connection with the invention, it has been found that the functional frequency of microwaves is 915 MHz or 2.45 GHz.

In the above example, microwaves are delivered from the ends of a core longitudinally. It is within the knowledge of a skilled person to know how microwaves can be delivered in a way other than longitudinally. Another option could be the delivery of microwaves crosswise relative to the axes of cores.

## Claims

1. An apparatus for forming pipe insulation sections of mineral wool, said apparatus comprising a section curing portion, which includes one or more of outer molds (31, 32) cylindrical in terms of their internal surface, the section curing portion further including a core (51, 52) installed inside each mold or capable of being installed therein and removed therefrom, whereby in connection with each outer mold (31, 32) are provided first elements for heating the outer mold at least over its internal surface, and second elements (61, 62; 11, 12; 21, 22) for irradiating a mineral wool section installed in the mold with microwaves, said core being made from a material that heats up in response to microwave irradiation, **characterised in that** the core is made of steel and that the frequency of the microwaves is 915 MHz or 2.45 GHz.

2. An apparatus as set forth in claim 1, wherein each mold (31, 32) comprises separable and assemblable bottom and top parts (54a and 54b), whereby, when the bottom and top mold parts are apart from each other, the bottom part can be fitted with the core (51, 52) around which is applied mineral wool sheet for a substantially tubular layer of mineral wool.

3. An apparatus as set forth in any one of claims 1 or 2, which includes roll-up elements for winding a mat-shaped mineral wool sheet at least in a single layer around the core (51, 52) for a substantially tubular mineral wool section blank.

4. An apparatus as set forth in claim 3, wherein said roll-up elements constitute a separate station, which is apart from the outer mold (31, 32) and from which the core (51, 52) and the mineral wool applied around it for a substantially tubular mineral wool section blank are capable of being transferred into and installed in the outer mold.

5. An apparatus as set forth in any one of the preceding claims, wherein the number of molds (31, 32) is at least two.

6. A method for forming pipe insulation sections of mineral wool, said method comprising
- heating one or more outer molds (31, 32) cylindrical in terms of their internal surface
- heating for each outer mold (31, 32) a core (51, 52) installed inside the mold or capable of being installed therein and removed therefrom
- wrapping mineral wool sheet around the still unheated or heated core (51, 52)
- irradiating the in-mold installed mineral wool section with microwaves, said core (51, 52) being made from a material that heats up in response to microwave irradiation, **characterised in that** the core (51, 52) is made of steel and that the frequency of the microwaves is 915 MHz or 2.45 GHz.

7. A method as set forth in claim 6, wherein the number of molds (31, 32) is not less than two, the curing being performed as batch curing.

8. A method as set forth in any one of claims 6 or 7, wherein the mineral wool sheet is wrapped around the core (51, 52) outside the mold (31, 32), after which the core is installed in the mold.

9. A method as set forth in any one of claims 6-8, wherein the core (51, 52) is heated prior to wrapping mineral wool sheet around the core.

## Patentansprüche

1. Vorrichtung zum Formen von Rohrisolationsabschnitten aus Mineralwolle, wobei die Vorrichtung einen Abschnittshärtungsteil umfasst, der ein oder mehrere Außenformen (31, 32) umfasst, die zylindrisch in Bezug auf ihre Innenfläche sind, wobei der Abschnittshärtungsteil ferner einen Kern (51, 52) umfasst, der im Inneren jeder Form installiert ist oder in der Lage ist, darin installiert zu werden, und daraus entfernt wird, wodurch in Verbindung mit jeder Außenform (31, 32) erste Elemente vorgesehen sind zum Erwärmen der Außenform zumindest über ihre Innenfläche, und zweite Elemente (61, 62; 11, 12; 21, 22) zum Bestrahlen eines Mineralwolleabschnitts, der in der Form installiert ist, mit Mikrowellen, wobei der Kern aus einem Material hergestellt ist, der sich als Reaktion auf die Mikrowellenbestrahlung erwärmt, **dadurch gekennzeichnet, dass** der Kern aus Stahl hergestellt ist und dass die Frequenz der Mikrowellen 915 MHz oder 2,45 GHz beträgt.

2. Vorrichtung nach Anspruch 1, wobei jede Form (31, 32) trennbare und zusammensetzbare Boden- und Oberteile (54a und 54b) umfasst, wodurch, wenn die Boden- und Oberformteile voneinander getrennt sind, der Bodenteil mit dem Kern (51, 52) versehen werden kann, um den Mineralwolleplatten für eine im Wesentlichen rohrförmige Schicht von Mineralwolle gelegt wird.

3. Vorrichtung nach einem der Ansprüche 1 oder 2, die Aufrollelemente zum Wickeln einer mattenförmigen Mineralwolleplatte in mindestens einer einzigen Schicht rund um den Kern (51, 52) für einen im Wesentlichen rohrförmigen Mineralwolle-Abschnittsrohling umfasst.

4. Vorrichtung nach Anspruch 3, wobei die Aufrollelemente eine separate Station darstellen, die von der Außenform (31, 32) getrennt ist und von der der Kern (51, 52) und die Mineralwolle, die rund um denselben gelegt wird für einen im Wesentlichen rohrförmigen Mineralwolle-Abschnittsrohling, in der Lage sind, in die Außenform übertragen und in derselben installiert zu werden.

5. Vorrichtung nach einem der vorherigen Ansprüche, wobei die Zahl der Formen (31, 32) mindestens zwei beträgt.

6. Verfahren zum Formen von Rohrisolationsabschnitten aus Mineralwolle, wobei das Verfahren umfasst
- Erwärmen von einer oder mehreren Außenformen (31, 32), die zylindrisch in Bezug auf ihre Innenfläche sind
- Erwärmen, für jede Außenform (31, 32), eines Kerns (51, 52), der im Inneren der Form installiert ist oder in der Lage ist, darin installiert und daraus entfernt zu werden
- Wickeln von Mineralwolleplatten um den noch nicht erwärmten oder den erwärmten Kern (51, 52)
- Bestrahlen des in der Form installierten Mineralwolleabschnitts mit Mikrowellen, wobei der Kern (51, 52) aus einem Material hergestellt ist, das sich als Reaktion auf die Mikrowellenbestrahlung erwärmt, **dadurch gekennzeichnet, dass** der Kern (51, 52) aus Stahl hergestellt ist und dass die Frequenz der Mikrowellen 915 MHz oder 2,45 GHz beträgt.

7. Verfahren nach Anspruch 6, wobei die Anzahl der Formen (31, 32) nicht kleiner als zwei ist, wobei das Härten als Batchhärtung ausgeführt wird.

8. Verfahren nach einem der Ansprüche 6 oder 7, wobei die Mineralwolleplatte um den Kern (51, 52) außerhalb der Form (31, 32) gewickelt wird, danach wird der Kern in der Form installiert.

9. Verfahren nach einem der Ansprüche 6-8, wobei der Kern (51, 52) vor dem Wickeln der Mineralwolleplatte um den Kern erwärmt wird.

## Revendications

1. Appareil pour former des sections d'isolation de tuyaux de laine de verre, ledit appareil comprenant une partie de traitement de section qui comprend un ou plusieurs moules externes (31, 32) cylindriques en termes de leur surface interne, la partie de traitement de section comprenant en outre un noyau (51, 52) mis en place à l'intérieur de chaque moule, ou pouvant être mis en place dans celui-ci et retiré de celui-ci, moyennant quoi, en lien avec chaque moule externe (31, 32), des premiers éléments sont fournis pour chauffer le moule externe au moins sur sa surface interne, et des deuxièmes éléments (61, 62 ; 11, 12 ; 21, 22) pour irradier une section de laine minérale mise en place dans le moule avec des micro-ondes, ledit noyau étant formé par un matériau qui chauffe en réponse à l'irradiation aux micro-ondes,
**caractérisé en ce que** le noyau est formé par de l'acier et que la fréquence des micro-ondes est de 915 MHz ou 2,45 GHz.

2. Appareil tel qu'exposé dans la revendication 1, dans lequel chaque moule (31, 32) comprend des parties inférieure et supérieure (54a et 54b) pouvant être séparées et réunies, moyennant quoi, lorsque les parties de moule inférieure et supérieure sont à part l'une de l'autre, la partie inférieure peut être ajustée au noyau (51, 52) autour duquel une feuille de laine minérale est appliquée pour une couche sensiblement tubulaire de laine minérale.

3. Appareil tel qu'exposé dans l'une quelconque des revendications 1 ou 2, lequel comprend des éléments d'enroulement pour enrouler une feuille de laine minérale en forme de tapis au moins en une seule couche autour du noyau (51, 52) pour une ébauche de section de laine minérale sensiblement tubulaire.

4. Appareil tel qu'exposé dans la revendication 3, dans lequel lesdits éléments d'enroulement constituent une station séparée, laquelle est à part du moule externe (31, 32) et à partir de laquelle le noyau (51, 52) et la laine minérale appliquée autour de lui pour une ébauche de section de laine minérale sensiblement tubulaire peuvent être transférés dans le moule externe et mis en place dans celui-ci.

5. Appareil tel qu'exposé dans l'une quelconque des revendications précédentes, dans lequel le nombre de moules (31, 32) est au moins de deux.

6. Procédé pour former des sections d'isolation de tuyaux de laine de verre, ledit procédé comprenant
- chauffer un ou plusieurs moules externes (31, 32) cylindriques en termes de leur surface interne,
- chauffer, pour chaque moule externe (31, 32), un noyau (51, 52) mis en place à l'intérieur du moule, ou pouvant être mis en place dans celui-ci et retiré de celui-ci,
- envelopper avec une feuille de laine minérale le noyau (51, 52) pas encore chauffé ou chauffé,
- irradier la section de laine minérale mise en place dans le moule avec des micro-ondes, ledit noyau (51, 52) étant formé par un matériau qui chauffe en réponse à l'irradiation aux micro-ondes,
**caractérisé en ce que** le noyau (51, 52) est formé par de l'acier et que la fréquence des micro-ondes est de 915 MHz ou 2,45 GHz.

7. Procédé tel qu'exposé dans la revendication 6, dans lequel le nombre de moules (31, 32) n'est pas inférieur à deux, le traitement étant réalisé en tant que traitement discontinu.

8. Procédé tel qu'exposé dans l'une quelconque des revendications 6 ou 7, dans lequel on enveloppe avec la feuille de laine minérale le noyau (51, 52) à l'extérieur du moule (31, 32), après quoi le noyau est mis en place dans le moule.

9. Procédé tel qu'exposé dans l'une quelconque des revendications 6-8, dans lequel le noyau (51, 52) est chauffé avant l'enveloppement du noyau avec une feuille de laine minérale.
